(19)

Europäisches
Patentamt
European
Patent Office
Office européen
des brevets

(11) **EP 4 458 783 A1**

(12) **EUROPEAN PATENT APPLICATION**
published in accordance with Art. 153(4) EPC

(43) Date of publication:
 **06.11.2024 Bulletin 2024/45**

(21) Application number: **22915892.8**

(22) Date of filing: **21.12.2022**

(51) International Patent Classification (IPC):
 *C03C 15/00* [(2006.01)] *B60K 35/00* [(2024.01)]
 *C03C 19/00* [(2006.01)] *C03C 21/00* [(2006.01)]
 *G09F 9/00* [(2006.01)]

(52) Cooperative Patent Classification (CPC):
 **B60K 35/00; C03C 15/00; C03C 19/00;
 C03C 21/00; G09F 9/00**

(86) International application number:
 **PCT/JP2022/047245**

(87) International publication number:
 **WO 2023/127669 (06.07.2023 Gazette 2023/27)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **KH MA MD TN**

(30) Priority: **27.12.2021 JP 2021213096**

(71) Applicant: **AGC INC.
 Chiyoda-ku,
 Tokyo 1008405 (JP)**

(72) Inventors:
 • **IMOTO Yuji
  Tokyo 100-8405 (JP)**
 • **FUJIWARA Yusuke
  Tokyo 100-8405 (JP)**

(74) Representative: **Müller-Boré & Partner
 Patentanwälte PartG mbB
 Friedenheimer Brücke 21
 80639 München (DE)**

(54) **GLASS, GLASS STRUCTURE, AND ON-VEHICLE DISPLAY DEVICE**

(57)   The present invention pertains to glass having a first main surface and a second main surface opposite to the first main surface. The glass has a thick region and a thin region that is adjacent to the thick region and that is thinner than the thick region as a result of having a recessed surface in the second main surface. The thin region includes: a bottom region which is flat on the second main surface side in a state where the first main surface is fixed so as to make contact with a flat surface; and a stepped region provided between the bottom region and the thick region. The thin region satisfies a specific formula (1).

*FIG. 4*

EP 4 458 783 A1

**Description**

TECHNICAL FIELD

The present invention relates to a glass, a glass structure, and an on-vehicle display device.

BACKGROUND ART

A liquid crystal display or an organic EL display may be used in an on-vehicle display device or the like that displays information necessary for driving or the like. In such a display, a cover glass may be disposed to protect a front surface. In recent years, an interior of a vehicle is required to have high designability, and a cover glass having a curved surface shape is required. As such a bending-formable glass, for example, a glass provided with regions having different thicknesses as in Patent Literature 1 is known.

CITATION LIST

PATENT LITERATURE

Patent Literature 1: U.S. Patent Publication No. 2021/0107829

SUMMARY OF INVENTION

TECHNICAL PROBLEM

However, when glass having different thicknesses is bent, stress may concentrate on a region having a smaller thickness and break, and the glass may not be sufficiently bent.
The present invention has been made in view of the above problems, and an object thereof is to provide a glass that is sufficiently bent, a glass structure, and an on-vehicle display device.

SOLUTION TO PROBLEM

In order to solve the above problem and implement the object, a glass according to the present invention is a glass having a first main surface and a second main surface opposite to the first main surface. The glass has a thick region and a thin region that is adjacent to the thick region, has a recessed surface in the second main surface, and is thinner than the thick region. The thin region includes: a bottom region that is flat on the second main surface side in a state where the first main surface is fixed so as to make contact with a flat surface; and a stepped region provided between the bottom region and the thick region. The thin region satisfies the following formula (1).
In formula (1), when a direction perpendicular to a thickness direction of the glass and also perpendicular to a direction in which a thickness of the glass is constant in the stepped region is defined as a first direction, $G_w$ represents a length (mm) of the thin region in the first direction, and $G_a$ represents a length (mm) of the stepped region in the first direction.
[Formula 1]

$$\frac{G_w - 2G_a}{G_w} \geq 0.5 \quad \cdots (1)$$

In order to solve the above problem and implement the object, a glass structure according to the present invention includes the glass and a filler filling the thin region of the glass.
In order to solve the above problem and implement the object, an on-vehicle display device according to the present invention includes a display and the glass structure.

ADVANTAGEOUS EFFECTS OF INVENTION

According to the present invention, a sufficiently bendable glass can be provided.

BRIEF DESCRIPTION OF DRAWINGS

[FIG. 1] FIG. 1 is a cross-sectional view illustrating an on-vehicle display device according to the present embodiment.

[FIG. 2] FIG. 2 is a schematic view of a glass structure according to the present embodiment in a bent state.

[FIG. 3] FIG. 3 is a schematic top view of the glass according to the present embodiment in a state of being fixed so as to make contact with a flat surface.

[FIG. 4] FIG. 4 is a cross-sectional view taken along a line A-A in FIG. 3.

[FIG. 5] FIG. 5 is a diagram illustrating an example of an enlarged view of a region C in FIG. 4.

[FIG. 6] FIG. 6 is a diagram illustrating another example of an enlarged view of the region C in FIG. 4.

[FIG. 7] FIG. 7 is a diagram illustrating another example of the enlarged view of the region C in FIG. 4.

[FIG. 8] FIG. 8 is a diagram illustrating another example of the enlarged view of the region C in FIG. 4.

[FIG. 9] FIG. 9 is a diagram illustrating another example of the schematic top view of the glass according to the present embodiment in the state of being fixed so as to make contact with a flat surface.

[FIG. 10] FIG. 10 is a cross-sectional view of a cover glass in Example 1.

[FIG. 11] FIG. 11 is a cross-sectional view of a cover glass in Example 2.

[FIG. 12] FIG. 12 is a cross-sectional view of a cover glass in Example 3.

[FIG. 13] FIG. 13 is a cross-sectional view of a cover glass in Example 4.

[FIG. 14] FIG. 14 is a cross-sectional view of a cover glass in Example 5.

[FIG. 15] FIG. 15 is a cross-sectional view of a cover glass in Example 6.

[FIG. 16] FIG. 16 is a cross-sectional view of a cover glass in Example 7.

[FIG. 17] FIG. 17 is a cross-sectional view of a cover glass in Example 8.

[FIG. 18] FIG. 18 is a cross-sectional view of a cover glass in Example 9.

DESCRIPTION OF EMBODIMENTS

Preferred embodiments of the present invention will be described below in detail with reference to the accompanying drawings. The present invention is not limited to these embodiments and also includes one constituted by a combination of the embodiments when there are a plurality of embodiments. In addition, numerical values include rounding ranges.

(On-vehicle Display Device)

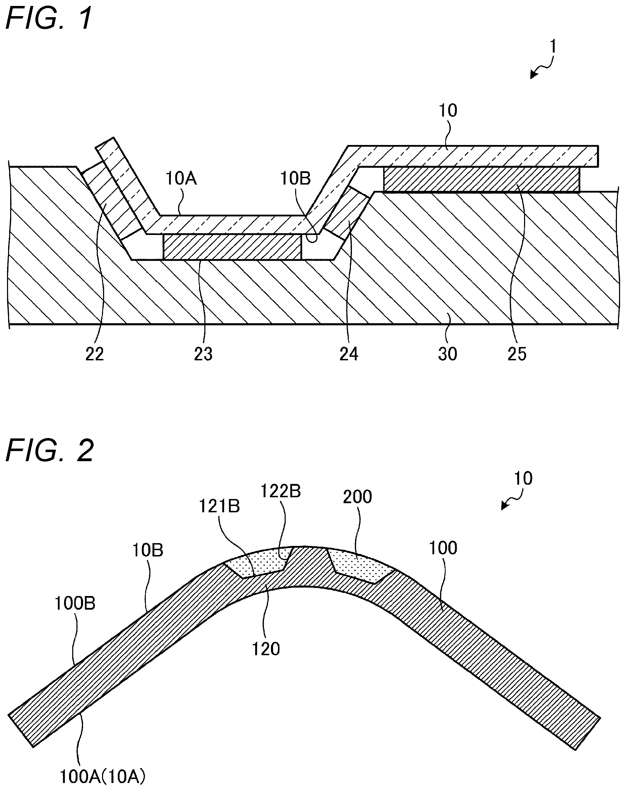

FIG. 1 is a cross-sectional view illustrating an on-vehicle display device according to the present embodiment.

An on-vehicle display device 1 is a display device mounted on a vehicle and used, and in the present embodiment, the on-vehicle display device 1 includes a cluster (an instrument cluster) disposed in front of a driver's seat and a center information display (CID) disposed in front of a space between the driver's seat and a passenger's seat. As illustrated in FIG. 1, in the on-vehicle display device 1 according to the present embodiment, a display 22, a display 23, and a display 24 of the cluster are disposed in a concave portion of a substrate 30. In the CID, a display 25 is disposed on a planar portion of the substrate 30.

Each of the displays 22 to 25 is, for example, a liquid crystal panel. In this case, a backlight unit is disposed on a back surface side of each liquid crystal panel. Each of the displays 22 to 25 may be, for example, but is not limited thereto, an organic EL panel, a plasma display panel (PDP), or an electronic ink panel, and may include a touch panel or the like.

In the present embodiment, a glass structure 10 is used as a cover glass that covers each of the displays 22 to 25. A second main surface 10B of the glass structure 10 is bonded to the display 25 via an optical clear adhesive (OCA) or an optical clear resin (OCR) (not illustrated). In addition, the second main surface 10B of the glass structure 10, which is elastically deformed into a convex shape, is bonded to the display 22, the display 23, and the display 24 via an OCA (not illustrated). Here, the glass structure 10 preferably has sufficient impact resistance such that the glass structure 10 does not break even when an occupant collides when a collision accident of the vehicle occurs.

The configuration in FIG. 1 is an example, and the on-vehicle display device 1 to which the glass structure 10 is applied may have any configuration. For example, in the on-vehicle display device 1, the displays 22 to 25 may be so-called rollable displays in which a shape of its screen can be changed by winding and unwinding the displays, and the glass structure 10 may be wound and unwound as a cover member of surfaces (front surfaces) of the displays 22 to 25. A part or all of the displays 22 to 25 may be movable displays that are folded and unfolded by a mechanism provided in the on-vehicle display device 1. In this case, in the glass structure 10, for example, a thick region 110 (to be described later) may be bonded to the displays 22 to 25 via a frame body or the like and may be held in a state where the glass structure 10 can be bent and unbent.

In addition, the glass structure 10 is not limited to being used as a cover member for a surface of the on-vehicle display device 1, and may be used for any application.

(Glass Structure)

FIG. 2 is a schematic view of the glass structure 10 according to the present embodiment in a bent state. As illustrated in FIG. 2, the glass structure 10 includes a glass 100 and a filler 200. The glass 100 has a first main surface 100A and a second main surface 100B which is a main surface opposite to the first main surface 100A. The filler 200 is filled in a space above the thin region 120 of the glass 100, and the details will be described below. In the present embodiment, as illustrated in FIG. 2, the glass structure 10 is bent such that the second main surface 10B on a side where the filler 200 is provided is convex. That is, in the case where the glass 100 is mounted on the on-vehicle display device 1 illustrated in FIG. 1, the first main surface 100A is exposed to the outside, and the second main surface 100B faces the displays 22 to 25.

(Glass)

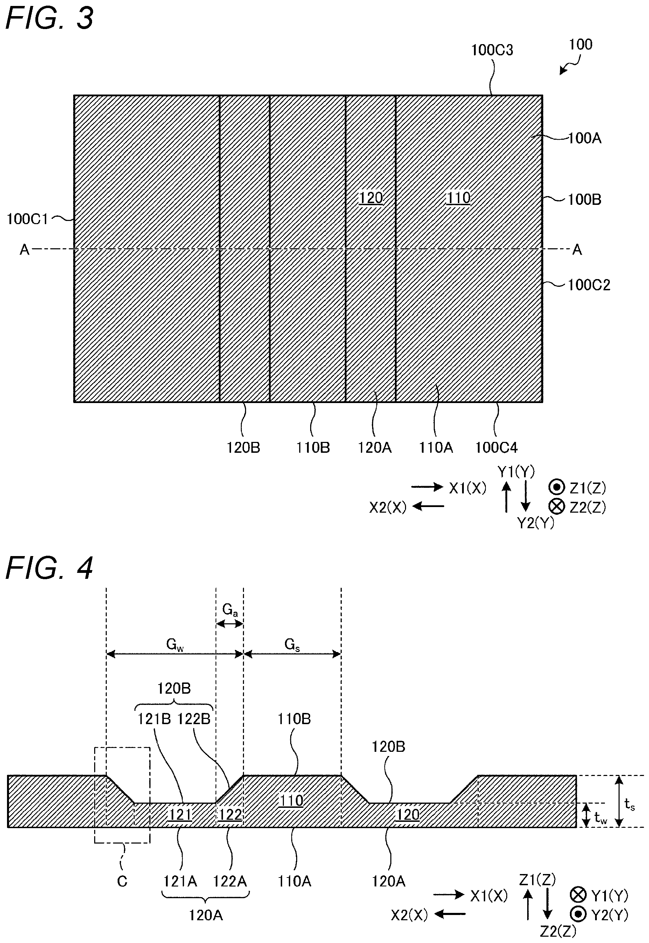

FIG. 3 is a schematic top view of the glass according to the present embodiment in a state where the first main surface is fixed so as to make contact with a flat surface, and FIG. 4 is a cross-sectional view taken along a line A-A in FIG. 3.

The glass 100 has a flat shape in the state where the first main surface 100A is fixed so as to make contact with a flat surface. For example, in the case of being mounted on the on-vehicle display device 1 or the like, the glass is in a bent state due to elastic deformation as illustrated in FIG. 2. Here, the state where the first main surface 100A is fixed so as to make contact with a flat surface refers to a state where the first main surface 100A is along the flat surface when substantially the entire area of the first main surface 100A is in contact with the flat surface only by its own weight, and may also refers to a state where no external load is applied and the first main surface 100A is not elastically deformed by the external load. Here, "substantially the entire area of the first main surface 100A" may refer to the entire area of the first main surface 100A being a flat surface, but is not limited thereto, and may refer to a region having an area of 95% or more of the entire area of the first main surface 100A, for example.

In the following description, unless otherwise specified, the glass 100 is in a state where the first main surface 100A is fixed so as to make contact with a flat surface. In FIGS. 4 to 9, a direction connecting the first main surface 100A and the second main surface 100B in a state where the first main surface 100A is in contact with a flat surface, that is, a thickness direction of the glass 100 is defined as a Z direction. In this case, a direction perpendicular to the thickness direction (the Z direction) of the glass 100 and also perpendicular to a direction in which a thickness of the glass is constant in a stepped region to be described later in the thin region 120 is defined as a first direction. Here, "a direction perpendicular to a direction in which a thickness of the glass is constant in a stepped region" is, for example, a direction parallel to a long side direction of the glass 100 in the case where the glass 100 is rectangular and the thin region 120 is provided in a direction parallel to a short side direction as in the example of FIG. 3. The first direction may be parallel to a horizontal direction when the glass 100 is mounted on a vehicle. In FIGS. 3 to 17, the first direction is defined as an X direction. A direction orthogonal to the Z direction and the X direction is taken as a Y direction (a second direction). Here, among directions parallel to the Z direction, a direction from the first main surface 100A toward the second main surface 100B is defined as a direction Z1, and the other direction is defined as a direction Z2. Among directions parallel to the X direction, a direction (rightward in the example of FIG. 3) is defined as a direction X1, and the other direction is defined as a direction X2. Similarly, among the directions parallel to the Y direction, one direction (upward in the example of FIG. 3) is referred to as a direction Y1, and the other direction is referred to as a direction Y2. The first direction means a direction perpendicular to a thickness direction of the glass 100 and also perpendicular to a direction in which the thickness of the glass is constant in stepped regions 122. The first direction may be, for example, a direction perpendicular to the thickness direction of the glass 100 and orthogonal to a boundary line between the thin region 120 and the thick region 110 to be described later.

In the example of the present embodiment, as illustrated in FIG. 3, the glass 100 has a rectangular shape when viewed from the direction Z1, and has four side surfaces 100C1, 100C2, 100C3, and 100C4. The side surface 100C1 is a side surface located on a direction X2 side of the glass 100, the side surface 100C2 is a side surface located on a direction X1 side of the glass 100, the side surface 100C3 is a side surface located on a direction Y1 side of the glass 100, and the side surface 100C4 is a side surface located on a direction Y2 side of the glass 100. However, the shape of the glass 100 is not limited to a rectangular shape when viewed from the direction Z1, and may be any shape.

As illustrated in FIG. 4, the glass 100 has a thick region 110 and a thin region 120 which are regions having different thicknesses.

The thin region 120 is a region having a smaller thickness than that of the thick region 110. Here, the thickness refers to a length of the thick region 110 or the thin region 120 in the Z direction. The thin region 120 is a concave portion, which is a recessed surface formed by recessing the second main surface 100B of the glass 100. That is, when a main surface of the thick region 110 on a second main surface 100B side is defined as a second main surface 110B and a recessed surface which is a main surface of the thin region 120 on the second main surface 100B side is defined as a second main surface 120B, the thick region 110 refers to a portion of the glass 100 where the second main surface 110B and the second main surface 100B of the glass 100 are on the same surface. The thin region 120 refers to a portion of the glass 100 where the second main surface 120B is located on a first main surface 100A side with respect to the second main surface 100B of the glass 100 (that is, the second main surface 110B of the thick region 110).

It is preferable that the first main surface 100A of the glass 100 is not recessed, that is, the first main surface 100A has a flat shape without a concave portion. The first main surface 100A of the glass 100 preferably has a flat shape without a convex portion. Further, it is more preferable that the first main surface 100A of the glass 100 has a flat shape without a concave portion nor a convex portion. Here, "the first main surface 100A has a flat shape" means that a flatness of the entire first main surface 100A is 0.05 mm or less.

Here, the first main surface 100A of the glass 100 includes a first main surface 120A which is a region overlapping with the recessed portion as the thin region 120, and a first main surface 110A which is a region not overlapping with the recessed portion as the thin region 120. That is, a main surface of the thick region 110 on the first main surface 100A side is the first main surface 110A, and a main surface of the thin region 120 on the first main surface 100A side is the first main surface 120A. In this case, the first main surface 110A and the first main surface 120A are preferably on the same surface.

As illustrated in FIG. 3, a plurality of thin regions 120 may be formed along the X direction, and in this case, the thick region 110 is formed between the thin regions 120 adjacent to each other in the X direction. A plurality of thick regions 110 may be formed along the X direction. In this case, it can also be said that the thin region 120 is formed between the thick regions 110 adjacent to each other in the X direction. That is, in the glass 100, the thick regions 110 and the thin regions 120 are alternately formed along the X direction. In the example of FIG. 3, the number of the thin regions 120 is two, but is not limited thereto, and any number of two or more thin regions 120 may be provided, or only one thin region 120 may be provided. Similarly, any number of two or more thick regions 110 may be provided, or only one thick region 110 may be provided. In the glass 100, it is preferable that the thin regions 120 are not provided at both ends in the X direction (a portion overlapping with the side surface 100C1 and a portion overlapping with the side surface 100C2 when viewed from the direction Z1), and the thick regions 110 are provided at both ends in the X direction.

As illustrated in FIG. 3, each of the thin regions 120 preferably extends in the Y direction. The thin region 120 is formed extending from one end of the glass 100 in the Y direction (a portion overlapping with the side surface 100C3 when viewed from the direction Z1) to the other end (a portion overlapping with the side surface 100C4 when viewed from the direction Z1). In FIG. 3, the glass 100 can be bent such that the second main surface 100B side is convex with the Y direction as an axis. However, the shape of the thin region 120 is not limited thereto. For example, the thin region 120 may extend in a direction inclined with respect to the Y direction, or an extension direction thereof may be curved rather than straight. The thin region 120 may be provided in some of the sections from one end to the other end of the glass 100 in the Y direction. The length of the thin region 120 in the first direction may be constant or changed as long as formula (1) to be described later is satisfied.

(Thick Region)

The thick region 110 refers to a region where a flatness is 0.05 mm or less when the flatness is measured with reference to a central position of the second main surface 110B of the thick region 110, that is, a region in a maximum range where the flatness is 0.05 mm or less including the central position. In other words, the thick region 110 refers to a region where, when the central position of the second main surface 110B in the X direction is set as a reference point, a position in the Z direction of each position on the second main surface 110B is within a range of 0.05 mm or less with respect to a position of the reference point in the Z direction. Here, the central position of the second main surface 110B refers to any position selected in the vicinity of the center of the second main surface 110B in the X direction, and may refer to, for example, a central position of a region where a thickness displacement is 0.05 mm or less in any region of 10 mm square on the second main surface 110B. A central position of the first main surface 110A may also indicate the same position. Similarly, when a central position of the first main surface 110A of the thick region 110 in the X direction is set as a reference point, the thick region 110 can be said to be a region where a position in the Z direction of each position on the first main surface 110A is within a range of 0.05 mm or less with respect to a position of the reference point in the Z direction. When the first main surface 110A and the second main surface 110B satisfy a range of displacement in the Z direction, the thick region 110 has a flat shape and has a reduced deviation in thickness. Therefore, stress at the time of contact with an adhesive layer or the like provided on the second main surface 110B side of the glass 100 can be dispersed and durability during use can be improved.

The flatness conforms to the definition of "Definitions and Indications of Geometric Deviation" defined in JIS B 0621: 1984, and can be measured by a three-dimensional measuring device using a contact probe or a laser probe, for example. The position in the Z direction of each position with respect to the reference point can be similarly measured by a three-dimensional measuring device using a contact probe or a laser probe.

The thickness $t_s$ of the thick region 110 is preferably 0.2 mm to 2.5 mm, more preferably 0.5 mm to 2.0 mm, and still more preferably 0.8 mm to 1.5 mm. Here, the thickness of the thick region 110 is preferably 0.2 mm or more, more preferably 0.5 mm or more, and still more preferably 0.8 mm or more. The thickness of the thick region 110 is preferably 2.5 mm or less, more preferably 2.0 mm or less, and still more preferably 1.5 mm or less. The thickness of the thick region 110 refers to a length from the first main surface 110A to the second main surface 110B in the Z direction. Regarding the measurement of the thickness, it is preferable to use an average value of values measured at a plurality of points in the thick region 110.

(Thin Region)

The thin region 120 is a region thinner than the thick region 110 in the glass 100. As illustrated in FIG. 4, the thin region 120 includes a bottom region 121 and a stepped region 122. The bottom region 121 is a region of the thin region 120 which is flat on the second main surface 100B side of the glass 100.

Here, a surface of the first main surface 120A of the thin region 120 on which the bottom region 121 is formed is defined as a first main surface 121A, and a surface of the second main surface 120B of the thin region 120 on which the bottom region 121 is formed is defined as a second main surface 121B.

The bottom region 121 refers to a region where a flatness is 0.07 mm or less when the flatness is measured with reference to a central position of the second main surface 120B of the bottom region 121, that is, a region in a maximum range in which the flatness is 0.07 mm or less including the central position. In other words, the bottom region 121 refers to a region where, when the central position of the second main surface 120B is set as a reference point, a position in the Z direction of each position on the second main surface 121B is within a range of 0.07 mm or less with respect to a position of the reference point in the Z direction. Similarly, when a central position of the first main surface 120A of the bottom region 121 is set as a reference point, the bottom region 121 can be said to be a region where a position in the Z direction of each position on the first main surface 121A is within a range of 0.07 mm or less with respect to a position of the reference point in the Z direction. In other words, it can be said that the second main surface 121B of the bottom region 121 has an overall flatness of 0.07 mm or less, and the bottom region 121 is a region of the thin region 120 where the flatness satisfies the above-described numerical range, and is a flat region having a small deviation in thickness. Here, the central position of the second main surface 120B refers to a position in the vicinity of the center of the second main surface 120B in the X direction, and may refer to, for example, a central position of a region where the thickness displacement is 0.07 mm or less in any region of 10 mm square on the second main surface 120B. A central position of the first main surface 120A may also indicate the same position.

The arithmetic average roughness Ra of the first main surface 121A and the second main surface 121B of the bottom region 121 defined in JIS B 0601: 2001 is preferably 4 nm or less, more preferably 3 nm or less, and still more preferably 2 nm or less. The arithmetic average roughness Ra can be measured by using an atomic force microscope (AFM).

The thickness $t_W$ of the bottom region 121 is preferably 0.05 mm or more and less than 0.5 mm, more preferably 0.10 mm to 0.25 mm, and still more preferably 0.15 mm to 0.2 mm. Here, the thickness of the bottom region 121 is preferably less than 0.5 mm, more preferably 0.25 mm or less, and still more preferably 0.2 mm or less. In addition, the thickness of the bottom region 121 is preferably 0.05 mm or more, more preferably 0.10 mm or more, and still more preferably 0.15 mm or more. The thickness of the bottom region 121 refers to a length from the first main surface 121A to the second main surface 121B in the Z direction. Regarding the measurement of the thickness, it is preferable to use an average value of values measured at a plurality of points in the bottom region 121.

(Stepped Region)

The stepped region 122 is a region between the bottom region 121 and the thick region 110 in the X direction and connects the bottom region 121 and the thick region 110. As illustrated in FIG. 4, the stepped region 122 refers to a region whose thickness changes from the thickness of the thick region 110 to the thickness of the bottom region 121. When a surface of the first main surface 120A of the thin region 120 on which the stepped region 122 is formed is defined as a first main surface 122A, the first main surface 122A can be said to be a region of the first main surface 120A other than the first main surface 121A of the bottom region 121. Similarly, when a surface of the second main surface 120B of the thin region 120 on which the stepped region 122 is formed is defined as a second main surface 122B, the second main surface 122B can be said to be a region of the second main surface 120B other than the second main surface 121B of the bottom region 121.

The second main surface 122B is a surface connecting the second main surface 120B of the thin region 120 and the second main surface 110B of the thick region 110, and the flatness is not particularly limited. A detailed shape of the second main surface 122B will be described later. On the other hand, the first main surface 122A preferably has a flat shape, and preferably has a flatness of 0.07 mm or less, more preferably 0.06 mm or less, and still more preferably 0.05 mm or less.

As illustrated in FIG. 4, the stepped regions 122 are formed on both the direction X1 side and the direction X2 side of the bottom region 121. The stepped region 122 of the bottom region 121 on the direction X1 side can be said to be a region from an end of the bottom region 121 on the direction X1 side to an end of the thick region 110 on the direction X2 side. Similarly, the stepped region 122 of the bottom region 121 on the direction X2 side can be said to be a region from an end of the bottom region 121 on the direction X2 side to an end of the thick region 110 on the direction X1 side.

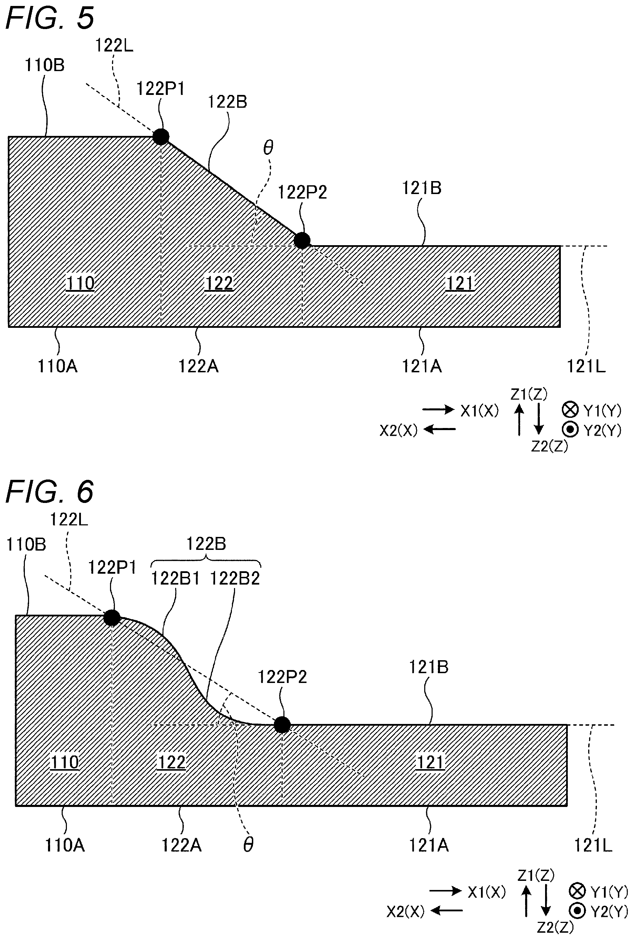

FIG. 5 is a diagram illustrating an example of an enlarged view of a region C in FIG. 4. A boundary between the thick region 110 and the thin region 120 is a position (a position in the Z direction is out of a range defined as the thick region 110 and is closest to the thick region 110 in the X direction) that is not flat with reference to a central position (a reference point) of the thick region 110 in the X direction, and corresponds to a point 122P1 in FIG. 5. That is, it can be said that the point 122P1 is an end on one side (on the direction X2 side) of the stepped region 122 in the X direction, and is a point that is a boundary between the second main surface 122B of the stepped region 122 and the second main surface 110B of the thick region 110.

Similarly, in the thin region 120, a boundary between the bottom region 121 and the stepped region 122 is a position (a position in the Z direction is out of a range defined as the bottom region 121 and is closest to the bottom region 121 in the X direction) that is not flat with reference to a central position (a reference point) of the thin region 120 in the X direction, and corresponds to a point 122P2 in FIG. 5. That is, it can be said that the point 122P2 is the other end (on the direction X1 side) of the stepped region 122 in the X direction, and is a point that is a boundary between the second main surface 122B of the stepped region 122 and the second main surface 121B of the bottom region 121.

As illustrated in FIG. 5, in the example of the present embodiment, the stepped region 122 may have a linear shape in a cross section including the thickness direction and the first direction, here, in a cross section viewed from the Y direction (the extension direction of the thin region 120). As illustrated in FIG. 5, the stepped region 122 preferably has an angle $\theta$ corresponding to the inclination of 25° to 90°, more preferably 30° to 85°, and still more preferably 35° to 80°. Here, the angle $\theta$ is preferably 90° or less, more preferably 85° or less, and still more preferably 80° or less. The case where the angle $\theta$ corresponding to the inclination is within the above range is preferable because stress is easily suppressed from concentrating on the stepped region 122. On the other hand, the angle $\theta$ corresponding to the inclination is preferably 25° or more, more preferably 30° or more, and still more preferably 35° or more. The case where the angle $\theta$ corresponding to the inclination is within the above range is preferable because an area of the bottom region 121 with respect to the entire thin region 120 can be increased. Here, the angle $\theta$ is an angle formed by a straight line 122L passing through the point 122P1 and the point 122P2 and an extension line of the second main surface 121B of the bottom region 121 in a cross section viewed from the Y direction (the extension direction of the thin region 120).

FIGS. 6 to 8 are diagrams illustrating other examples of an enlarged view of the region C in FIG. 4. The stepped region 122 is not limited to have a linear shape, and may have a curved surface shape (curved shape) in the cross section viewed from the Y direction, or may include both a linear shape and a curved shape.

For example, as illustrated in FIG. 6, the shape of the second main surface 122B may include a convex region 122B1 and a concave region 122B2. The convex region 122B1 is a region that is connected to the thick region 110 and that has a curved surface convex with respect to the straight line 122L connecting the point 122P1 and the point 122P2. The concave region 122B2 is a region where the thick region 110 side is connected to the convex region 122B1 and the bottom region 121 side is connected to the bottom region 121, and is a region having a curved surface concave with respect to the straight line 122L. The expression "convex with respect to the straight line 122L" refers to, for example, protruding, that is, convex, from the straight line 122L toward the second main surface 110B side. The expression "concave with respect to the straight line 122L" refers to, for example, protruding, that is, convex, from the straight line 122L toward the first main surface 110A side.

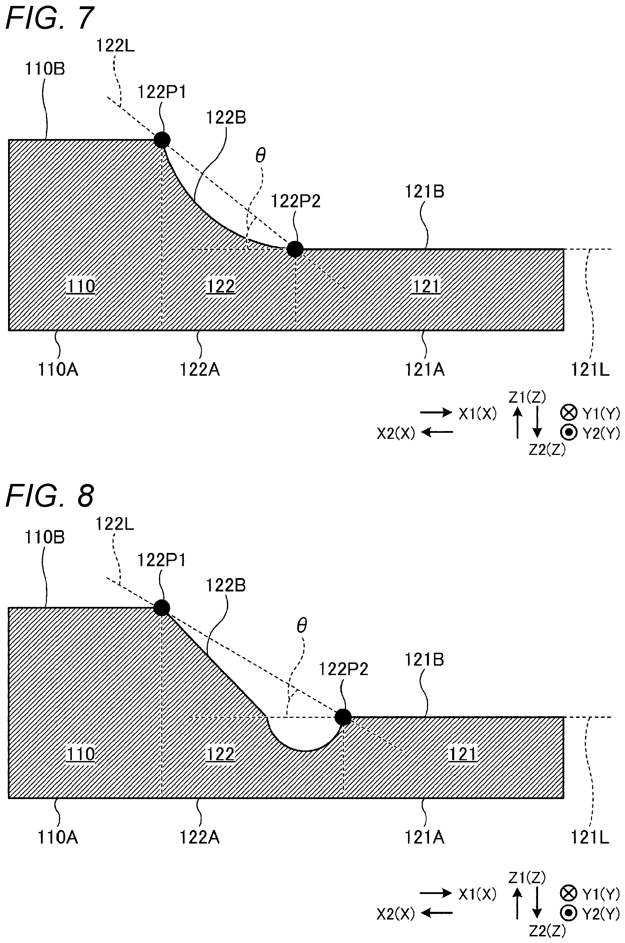

In addition, for example, as illustrated in FIG. 7, the second main surface 122B may have a concave curved surface shape with respect to the straight line 122L, that is, is convex toward the first main surface 110A side over the entire area.

For example, as illustrated in FIG. 8, a part of the second main surface 122B may have a linear shape, and a part of the second main surface 122B may have a concave curved surface shape with respect to the straight line 122L.

As illustrated in FIG. 7 and FIG. 8, the curved portion of the second main surface 122B is more preferably concave with respect to the straight line 122L. In the case where the stepped region 122 is a curved surface, the curvature radius (approximate radius) thereof is not particularly limited, and may be, for example, 100 $\mu$m or more and 1000 $\mu$m or less when viewed from the Y direction, and the curvature radius may be 900 $\mu$m or less and may be 500 $\mu$m or less. By forming the second main surface 122B in such shapes, a stress generated when the glass is bent is alleviated, and the glass is more easily bent. The stepped region 122 preferably has an arc shape when viewed from the Y direction, and the curvature radius of the stepped region 122 in this case refers to a curvature radius of an arc formed by the stepped region 122. However, the stepped region 122 may not have an arc shape when viewed from the Y direction, and in this case, the curvature radius of an arc that connects the point 122P1 and the point 122P2 and has a minimum deviation with respect to a profile passing through the stepped region 122 from the point 122P1 to the point 122P2 may be set as the curvature radius of the stepped region 122.

As will be described later, the thin region 120 is usually formed by slimming, grinding processing, laser processing, or the like, but when the second main surface 122B is formed to have a shape illustrated in FIG. 8 by etching, another processing is further required in addition to a first etching for forming the thin region 120. Therefore, the shape illustrated in FIG. 6 or FIG. 7 is preferable. In the case of the shape illustrated in FIG. 7, since a tensile stress is generated at the end point 122P1 after chemical strengthening treatment to be described later, the shape illustrated in FIG. 6 is more preferable.

(Relation between Shapes of Thick Region and Thin Region)

Here, when the glass 100 is bent, the glass 100 may be damaged due to stress concentration in the thin region 120, and when the glass 100 is bent to avoid damage, the bending may not be sufficient. As a result of intensive studies, the inventors of the invention have found that the damage to the glass 100 can be prevented by setting the shape of the thin region 120 to an appropriate shape, preferably by setting the relation between the shapes of the thick region 110 and the thin region 120 to an appropriate range. This will be specifically described below. Hereinafter, the width (the length in the X direction) of the thin region 120 is defined as $G_w$ (mm), and the width of the stepped region 122 of the thin region 120 is defined as $G_a$ (mm). Here, $G_a$ means the width of the stepped region 122 located in the X1 direction or the X2 direction of the end surface region 121 of the thin region 120.

In the case where two or more thin regions 120 are formed in the first direction and the thick region 110 is formed between the thin regions 120, it can be said that the width $G_s$ refers to a width of the thick region 110 between the thin regions 120 in the X direction, that is, a length in the X direction from a boundary position between the thick region 110 and the stepped region 122 adjacent thereto on the direction X1 side to a boundary position between the thick region 110 and the stepped region 122 adjacent thereto on the direction X2 side. In the case where the width $G_s$ refers to the width of the thick region 110 on an end in the X direction, it can be said that the width $G_s$ refers to a length in the X direction from the end of the thick region 110 on the direction X1 side to the boundary position between the thick region 110 and the stepped region 122 adjacent thereto on the direction X2 side. That is, it can be said that the width $G_s$ is a value indicating a distance between the thin regions 120 in the X direction.

It can be said that the width $G_w$ refers to a length in the X direction from a boundary position between the thin region 120 and the thick region 110 adjacent thereto on the direction X1 side to a boundary position between the thin region 120 and the thick region 110 adjacent thereto on the direction X2 side. It can be said that the width $G_a$ refers to a length in the X direction from a boundary position between the stepped region 122 and the thick region 110 adjacent thereto on the direction X1 side to a boundary position between the stepped region 122 and the bottom region 121 adjacent thereto on the direction X2 side.

Here, it can be said that the width "$G_w - 2G_a$" (a value obtained by subtracting the width $G_a$ at both ends from the width $G_w$) is a value corresponding to the width of the bottom region 121. Regarding $G_a$, in the case where the length in the first direction is different between the stepped region 122 of the thin region 120 on the direction X1 side and the stepped region 122 of the thin region 120 on the direction X2 side, the length in the first direction of the former is defined as $G_{a1}$ and the length in the first direction of the latter is defined as $G_{a2}$, and the above-described width "$G_w - 2G_a$" (a value obtained by subtracting the width $G_a$ from the width $G_w$) is replaced with the width "$G_w - (G_{a1} + G_{a2})$" (a value obtained by subtracting a sum of the widths $G_{a1}$ and $G_{a2}$ at both ends from the width $G_w$). That is, the numerator on the left side of formula (1) is also replaced from ($G_w - 2G_a$) to $\{G_w - (G_{a1} + G_{a2})\}$ to conduct calculation.

In the case where the angle θ is 90°, $G_a$ is 0.

Regarding the thin region 120, it is preferable that the width "$G_w - 2G_a$" of the bottom region 121 and the width $G_w$ of the thin region 120 satisfy formula (1). Formula (1) can be said to be a formula that represents a lower limit value of the width "$G_w - 2G_a$" of the bottom region 121 with respect to the width $G_w$ of the thin region 120. In the thin region 120, by providing the bottom region 121 to satisfy formula (1), formation of a position where a thickness is locally reduced in the thin region 120 is prevented. As a result, since it is possible to prevent stress concentration at a specific position and to prevent damage at the time of bending, it is possible to realize a smaller curvature radius compared to a case where formula (1) is not satisfied but pitches are the same. Furthermore, when the glass 100 is chemically strengthened, concentration of internal tensile stress on the end point 122P1 and the end point 122P2 can be prevented. In the case where the plurality of thin regions 120 are provided, any one of the thin regions 120 may be designed to satisfy formula (1), and all the thin regions 120 preferably satisfy formula (1).

The width "$G_w - 2G_a$" of the bottom region 121 with respect to the width $G_w$ of the thin region 120 (the left side of formula (1)) is preferably 0.5 or more and 0.9 or less, and more preferably 0.6 or more and 0.8 or less.
[Formula 2]

$$\frac{G_w - 2G_a}{G_w} \geq 0.5 \quad \cdots (1)$$

In the case where the plurality of thin regions 120 are provided, the glass 100 more preferably satisfies formula (2). Formula (2) is mathematical formula relating to a ratio of the width $G_s$ of the thick region 110 to the width $G_w$ of the thin region 120 (a relational expression of concave-convex pitches), and it can also be said that the formula is a formula indicating a lower limit value of the width $G_s$ of the thick region 110 with respect to a sum of the width $G_w$ of the thin region 120 and the width $G_s$ of the thick region 110. Accordingly, when the width $G_s$ of the thick region 110 is designed to satisfy formula (2), the thick region 110 is formed over a sufficient width, and thus the strength of the glass 100 is sufficient.

The width $G_s$ of the thick region 110 with respect to the sum of the width $G_w$ of the thin region 120 and the width $G_s$ of the thick region 110 (the left side of formula (2)) is preferably 0.5 or more and 0.95 or less, and more preferably 0.55 or more and 0.9 or less.

[Formula 3]

$$\frac{G_s}{G_w + G_s} \geq 0.5 \quad \cdots (2)$$

In the case where the glass 100 satisfies formula (1) and preferably satisfies formulas (1) and (2), a small curvature radius can be realized while maintaining strength. In the case where the plurality of thin regions 120 and the plurality of thick regions 110 are provided, it is preferable that any one of the minimum structures satisfies formulas (1) and (2), and it is more preferable that all the minimum structures satisfy formulas (1) and (2).

Here, tf is defined as a value represented by formula (3). In addition, tf corresponds to an average thickness (mm) of a minimum structure including one thick region 110 and one thin region 120 adjacent to the thick region 110. In formula (3), $t_s$ is the thickness (mm) of the thick region 110, and $t_w$ is the thickness (mm) of the bottom region 121. $G_w$ and $G_s$ are the same as those in formula (2). In this case, in the case where the glass 100 is a chemically strengthened glass, the glass 100 more preferably satisfies formula (4). Here, $\sigma_{CS}$ refers to a compressive stress value (MPa) that acts on a main surface of the glass 100 by chemical strengthening, and can be said to be a surface compressive stress (CS) in a compressive stress layer to be described later. E refers to Young's modulus (GPa) of the glass 100 to be described later. In addition, R refers to a curvature radius (mm) in a thin region of the glass 100 in a state of being bent due to elastic deformation, and refers to, for example, a curvature radius of the glass 100 mounted on the on-vehicle display device 1 or the like in a bent state. Accordingly, it can be said that formula (4) is a formula representing an upper limit value of the average thickness tf of a minimum structure that the glass 100 can withstand to be bent to the curvature radius R, and is a formula representing an upper limit value of the width $G_s$ of the thick region 110 with respect to the width $G_w$ of the thin region 120. In other words, when the width $G_w$ of the thin region 120, the width $G_s$ of the thick region 110, the thickness $t_s$ of the thick region 110, and the thickness $t_w$ of the bottom region 121 are designed to satisfy formula (4) with respect to the desired curvature radius R, so that the glass can be sufficiently bent.

The curvature radius R may be a curvature radius of an arc that connects an end point on one side and an end point on the other side of a curved region on a main surface of the glass 100 and has a minimum deviation with respect to a profile that passes through the main surface of the glass 100 from the end point on the one side to the end point on the other side. The curvature radius R is, for example, 10 mm to 10000 mm, preferably 10 mm to 200 mm, more preferably 20 mm to 100 mm, and still more preferably 20 mm to 50 mm. Here, the curvature radius R is, for example, 10000 mm or less, preferably 200 mm or less, more preferably 100 mm or less, and still more preferably 50 mm or less. On the other hand, the curvature radius R is preferably 10 mm or more, and more preferably 20 mm or more. Preferred numerical ranges of E and $\sigma_{CS}$ will be described later.

[Formula 4]

$$t_f = \frac{t_w G_w + t_s G_s}{G_w + G_s} \quad \cdots (3)$$

[Formula 5]

$$1.198E \left( \frac{t_f}{2R - t_f} \right) < 1.5\sigma_{cs} \quad \cdots (4)$$

As described above, by setting the width of the thick region 110 and the width of the thin region 120 to satisfy formulas (1), (2), and (4), it is possible to realize a smaller bending while maintaining the higher strength of the glass 100. In the case where the plurality of thin regions 120 and the plurality of thick regions 110 are provided, it is preferable that any one of the minimum structures satisfies formulas (1), (2), and (4), and it is more preferable that all the minimum structures satisfy formulas (1), (2), and (4).

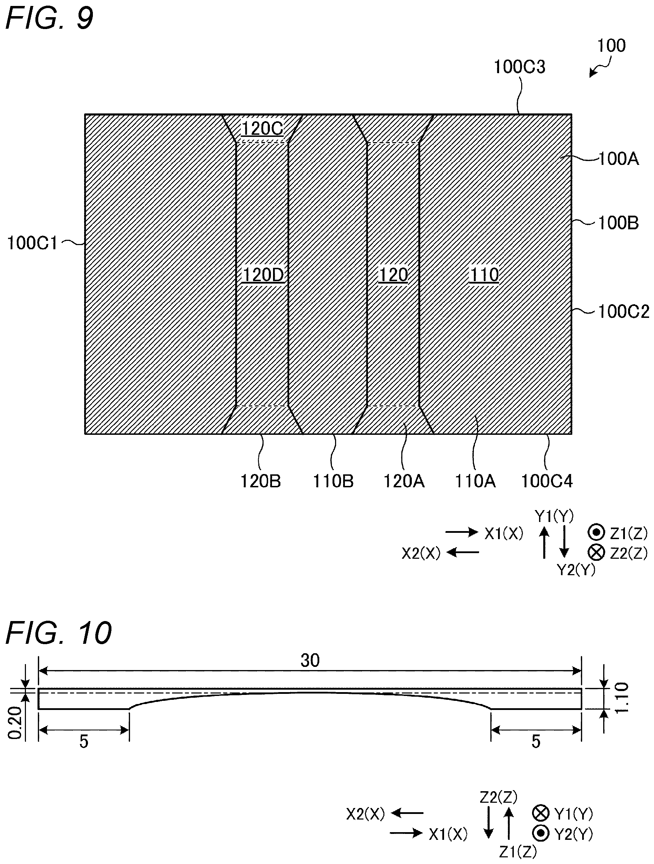

The widths of the thick region 110 and the thin region 120 are not limited to being constant. FIG. 9 is a diagram illustrating another example of the schematic top view of the glass according to the present embodiment in the state of being fixed so as to make contact with a flat surface. For example, as illustrated in FIG. 9, the width of the thin region 120 may be formed to be large at both ends in the Y direction. That is, a region of the thin region 120 located at the center in the Y direction is referred to as a central region 120D, and regions located on the direction Y1 side and the direction Y2 side with respect to the central region 120D are referred to as end regions 120C. The end regions 120C are located at positions overlapping an end on the direction Y1 side and an end on the direction Y2 side of the glass 100 when viewed from the Z direction. In this case, in the central region 120D, the width (the length in the X direction) of the thin region 120 is constant. Here, the expression "constant" includes a range that is not exactly the same, for example, a deviation within a range of 5% with respect to the average value of the width of the central region 120D is also allowed. On the other hand, in the end region 120C, the width of the thin region 120 increases as apart from the central region 120D. Thus, by providing the end region 120C having a large width, it is possible to appropriately prevent damage starting from an edge.

The ratio of the length of the central region 120D in the Y direction to the length of the entire thin region 120 in the Y direction is preferably 1% or more and 15% or less, more preferably 2% or more and 13% or less, and still more preferably 3% or more and 11% or less.

In the case where the central region 120D and the end region 120C exist as described above, values in the central region 120D may be used as various parameters such as the widths $G_w$, $G_a$, and Gs in formulas (1) to (4).

(Glass Material)

The Young's modulus ($E_{cg}$) of the glass 100 is preferably 60 GPa to 95 GPa, and more preferably 70 GPa to 90 GPa. Here, the Young's modulus ($E_{cg}$) is preferably 60 GPa or more, and more preferably 70 GPa or more. The Young's modulus ($E_{cg}$) of the glass 100 is preferably 95 GPa or less, and more preferably 90 GPa or less. The Young's modulus of members including the glass 100 may be obtained by a tensile test (JIS K7161 (2014), JIS K7113 (1995)).

The glass 100 is preferably a strengthened glass such as a chemically strengthened glass.

In the case where the glass 100 is a strengthened glass, the thickness (DOL) of the compressive stress layer in a cover member is preferably 5 $\mu$m to 180 $\mu$m, more preferably 10 $\mu$m to 180 $\mu$m, and still more preferably 15 $\mu$m to 50 $\mu$m. Here, the thickness (DOL) of the compressive stress layer is, for example, preferably 5 $\mu$m or more, more preferably 10 $\mu$m or more, and still more preferably 15 $\mu$m or more. The thickness (DOL) of the compressive stress layer is, for example, preferably 180 $\mu$m or less, and more preferably 50 $\mu$m or less.

The surface compressive stress (CS) in the compressive stress layer is preferably 500 MPa or more, more preferably 650 MPa or more, and still more preferably 750 MPa or more. An upper limit is not particularly limited, but for example, CS is preferably 1200 MPa or less.

A method for obtaining a chemically strengthened glass by subjecting a glass to chemical strengthening treatment will be described later.

A material of the glass 100 may be any material, and examples thereof include a soda lime glass and an aluminosilicate glass ($SiO_2$-$Al_2O_3$-$Na_2O$-based glass or $SiO_2$-$Al_2O_3$-$Li_2O$-$Na_2O$-based glass). Among these, aluminosilicate glass is preferable from the viewpoint of strength.

Examples of the material of the glass 100 include: a glass material containing, as represented by mol% based on oxides, 50% or more and 80% or less of $SiO_2$, 1% or more and 20% or less of $Al_2O_3$, 6% or more and 20% or less of $Na_2O$, 0% or more and 11% or less of $K_2O$, 0% or more and 15% or less of MgO, 0% or more and 6% or less of CaO, and 0% or more and 5% or less of $ZrO_2$; and a glass material containing, as represented by mol% based on oxides, 50% or more and 80% or less of $SiO_2$, 2% or more and 25% or less of $Al_2O_3$, 0.1% or more and 20% or more of $Li_2O$, 0.1% or more and 18% or less of $Na_2O$, 0% or more and 10% or less of $K_2O$, 0% or more and 15% or less of MgO, 0% or more and 5% or less of CaO, 0 or more and 5% or less of $P_2O_5$, 0% or more and 5% or less of $B_2O_3$, 0% or more and 5% or less of $Y_2O_3$, and 0% or more and 5% or less of $ZrO_2$.

As the material of the glass 100, a glass for chemical strengthening, which is based on an aluminosilicate glass, (for example, "Dragontrail (registered trademark)" manufactured by AGC Inc.) can be also suitably used.

(Filler)

As illustrated in FIG. 2, the filler 200 is filled in a space above the thin region 120, in other words, a space surrounded by the second main surface 121B of the bottom region 121 and the second main surfaces 122B of the stepped regions 122 at both ends. In the case where the refractive index of the filler 200 is not appropriately controlled, light from a display panel or the like is reflected by the stepped region 122, and the reflected light is recognized, so that the stepped region 122 is visually recognized. In order to prevent the reflected light, attention is paid to the standard relative luminosity (standard relative luminosity in photopic vision and scotopic vision) defined by the International Commission on Illumination (CIE). According to the standard relative luminosity, a human feels light in the vicinity of 555 nm strongest in a bright place, and feels light in the vicinity of 507 nm strongest in a dark place. Therefore, in order to prevent the stepped region 122 from being visually recognized due to a difference in refractive index, the difference in refractive index between the filler 200 and the glass 100 at a wavelength of 555 nm is 0.015 or less in absolute value, preferably 0.013 or less, more preferably 0.011 or less, still more preferably 0.009 or less, and particularly preferably 0.008 or less. The difference in refractive index between the filler 200 and the glass 100 at a wavelength of 507 nm is 0.015 or less in absolute value, preferably 0.013 or less, more preferably 0.011 or less, still more preferably 0.011 or less, and particularly preferably 0.008 or less. It is more preferable that the difference in refractive index between the filler 200 and the glass 100 at a wavelength of 555 nm and the difference in refractive index between the filler 200 and the glass 100 at a wavelength of 507 nm are both within the above range.

The filler 200 is, for example, a cured product of an adhesive (a transparent adhesive) such as a thermosetting adhesive or an ultraviolet-curable adhesive, but is not limited thereto as long as the refractive index satisfies the above-described optical conditions. The filler 200 may be a liquid such as water, oil, an organic solvent, a liquid polymer, an ionic liquid, or a mixture thereof. More specifically, examples of the filler 200 include propylene glycol, dipropylene glycol, tripropylene glycol, a straight silicone oil (dimethyl silicone oil, methyl phenyl silicone oil, methyl hydrogen silicone oil, or the like), a denatured silicone oil, an acrylic acid polymer, a liquid polybutadiene, glycerin paste, a fluorine solvent, a fluorine resin, acetone, ethanol, xylene, toluene, water, mineral oil, and a mixture thereof.

(Method for Producing Glass)

Some producing methods can be expected for the glass 100 according to the present embodiment, and for example, it can be produced by slimming a plate-shaped glass. Here, the slimming includes masking and etching. However, a method for producing the glass 100 according to the present embodiment is not limited thereto, and it may be produced by grinding processing or laser processing a plate-shaped glass. The glass 100 may be produced by combining the above methods. For example, after the thin region 120 and the thick region 110 are formed by grinding processing, etching may be further performed to form a shape of the second main surface 122B of the stepped region 122 or smooth the surface. Hereinafter, each producing method will be described.

A processing method using slimming will be described below. In the masking, a surface of the second main surface 100B of the glass 100, which is to be the second main surface 110B of the thick region 110, and the entire first main surface 100A are covered with a mask material. A material of the mask material is not particularly limited as long as the material has resistance to an etching liquid to be described later, and a known material in the related art can be appropriately selected and used.

As the mask material, a resist pattern may be formed on the second main surface 100B of the glass 100. In this case, first, a known resist coating material is coated on the second main surface 100B of the glass 100 to obtain a resist film. The obtained resist film is exposed through a photomask with a pattern having a desired shape. The exposed resist film is developed to form a resist pattern.

After masking, the glass 100 covered with the mask material is etched by using an etching liquid. Accordingly, a portion of the glass 100 not covered with the mask material is dissolved in the etching liquid.

The dissolution gradually proceeds from the second main surface 100B not covered with the mask material toward the first main surface 100A. Thus, a portion constituting the thin region 120 is formed. Here, since etching is performed by using an etching liquid, a smooth etched surface (a curved surface) is formed, and a portion constituting the stepped region 122 is formed. In the case of forming the end region 120C, it is preferable that the both ends in the Y direction where the end regions 120C are formed are not covered with the mask material. Accordingly, when the dissolution by the etching sufficiently proceeds, the etching proceeds in the X direction at both ends, and portions constituting the end regions 120C are formed. In addition, a portion that is maintained without being dissolved becomes the thick region 110.

Although a so-called wet etching using an etching liquid has been described here, dry etching using fluorine gas may be used as long as the above-described shape is obtained.

After the etching, the mask material is appropriately removed by a known method.

A processing method using grinding processing will be described below. After the first main surface 100A side of the glass 100 is placed on a flat surface by its own weight, the second main surface 100B is subjected to grinding processing. The grinding processing is performed by using a surface grinding apparatus such as a milling machine. A type of the grindstone of the surface grinding apparatus used for grinding is not particularly limited, and for example, a diamond grindstone can be used. In the grinding processing step, a coolant may be supplied to prevent a local increase in temperature of a processed portion.

A processing method using laser processing will be described below. After the first main surface 100A side of the glass 100 of the glass 100 is placed on a flat surface by its own weight, the second main surface 100B is subjected to laser processing. For example, processing is performed by concentrating a laser pulse to focus on the second main surface 100B of the glass 100.

The processed glass 100 is preferably subjected to a chemical strengthening treatment.

The chemical strengthening treatment is performed by a known method. Examples of a molten salt used for the chemical strengthening treatment include alkali nitrate salts, alkali sulfate salts, and alkali chloride salts, such as potassium nitrate, sodium nitrate, potassium sulfate, and sodium sulfate. These molten salts are not limited to being used alone, a plurality of types of molten salts may be used in combination, and other salts may be mixed to adjust chemical strengthening characteristics. Accordingly, in a surface layer of the glass 100, alkali ions (Li ions or Na ions) are ion-exchanged (substituted) with other alkali ions (Na ions or K ions) having a larger ionic radius in the molten salt, followed by cooling to around room temperature. By this ion exchange, a layer (a compressive stress layer) in which a compressive stress is generated due to high density is formed on the surface layer of the glass 100. Thus, the glass 100 can be strengthened. Treatment conditions such as a temperature of the molten salt and an immersion time may be set so that a compressive stress value (CS) of the compressive stress layer and the thickness (DOL) of the compressive stress layer have desired values.

The glass 100 subjected to the chemical strengthening treatment may be further subjected to an acid treatment and an alkali treatment.

The acid treatment is a treatment in which the glass 100 subjected to the chemical strengthening treatment is immersed in an acid solution. Accordingly, Na and/or K on the surface of the glass 100 subjected to the chemical strengthening treatment is substituted with H. That is, a surface layer of the compressive stress layer in the glass 100 subjected to the chemical strengthening treatment is altered to a low-density layer having a low density.

The alkali treatment is a treatment in which the glass 100 subjected to the acid treatment is immersed in a basic solution. Accordingly, a part or all of the low-density layer formed by the acid treatment is removed. Thus, cracks or latent scratches that exist on the surface of the glass 100 can be removed together with the low-density layer.

As described above, the glass 100 according to the present embodiment is a glass having the first main surface 100A and the second main surface 100B opposite to the first main surface 100A, and has the thick region 110 and the thin region 120 that is adjacent to the thick region 110 and that is thinner than the thick region 110 as a result of having a recessed surface in the second main surface 100B. The thin region 120 includes: the bottom region 121 which is flat on the second main surface side 100B in a state where the first main surface 100A is fixed so as to make contact with a flat surface; and the stepped region 122 provided between the bottom region 121 and the thick region 110. The thin region 120 satisfies formula (1). Since the thin region 120 satisfies formula (1), stress concentration at the center of the thin region 120 can be prevented, and the glass 100 according to the present embodiment can be prevented from being damaged when the glass 100 is bent and can be sufficiently bent.

The thick region 110 preferably includes a flat region in the state where the first main surface 100A is fixed so as to make contact with a flat surface. By forming the first main surface 110A as a flat surface, stress concentration at the time of attachment to a display or the like can be prevented, and the glass 100 can be prevented from being damaged and can be sufficiently bent.

In a cross section (here, a cross section viewed from the Y direction) including the thickness direction of the glass 100 and the first direction in a state where the first main surface 100A is fixed so as to make contact with a flat surface, an angle $\theta$ formed by the straight line 122L including one end point 122P1 and the other end point 122P2 of the stepped region 122 and an extension line of the bottom region 121 is preferably 25° or more and 90° or less. It is preferable that the second main surface 122B of the stepped region 122 includes a region which is a curved line in the cross section and the curved line is convex toward the first main surface 100A with respect to the straight line 122L. In the glass 100 according to the present embodiment, in the case where the second main surface 122B of the stepped region 122 is formed into this shape, stress concentration at the center of the thin region 120 can be prevented, and the glass 100 can be prevented from being damaged and can be sufficiently bent.

In the glass 100, it is preferable that two or more thin regions 120 are formed in the first direction (the X direction), the thick region 110 is formed between the thin regions 120, and the thin regions and the thick region formed therebetween satisfy formula (2). In the case where the pitch of concave and convex portions of the thick region 110 and the thin regions 120 satisfies formula (2), the glass 100 according to the present embodiment can be prevented from being damaged and can be sufficiently bent.

It is preferable that the glass 100 is a chemically strengthened glass, two or more thin regions 120 are formed in the first direction (the X direction), and in a state where the thin regions 120 form a curved surface having a curvature radius R (mm) by elastic deformation, when $t_f$ is obtained by the following formula (3), at least one of the thin regions satisfies formula (4). In the case where the pitch of concave and convex portions of the thick region 110 and the thin regions 120 satisfies formula (4), the glass 100 according to the present embodiment can be sufficiently bent.

The curvature radius R of the curved surface (the curved portion) formed by at least one of the thin regions 120 is preferably 10 mm or more and 10000 mm or less. By setting the curvature radius R within this range, the glass 100 can be prevented from being damaged and can be sufficiently bent.

The thickness $t_s$ of the thick region 110 is preferably 0.2 mm or more and 2.5 mm or less. By setting the thickness $t_s$ of the thick region 110 within this range, the glass 100 can be prevented from being damaged and can be sufficiently bent.

The thickness $t_w$ of the bottom region 121 is preferably 0.05 mm or more and 0.5 mm or less. By setting the thickness $t_w$ of the bottom region 121 within this range, the glass 100 can be sufficiently bent.

The glass 100 according to the present embodiment is preferably bendable around the second direction (the Y direction) perpendicular to the thickness direction of the glass 100 and the first direction. Accordingly, the glass 100 is sufficiently bent in the X direction.

The thin regions 120 preferably extend in a direction (for example, the Y direction) perpendicular to the thickness direction (the Z direction) of the glass 100. For example, in the case where the thin region 120 extends in the second direction (the Y direction) perpendicular to the first direction (X direction) in addition to the thickness direction (the Z direction) of the glass 100, the glass 100 is sufficiently bent in the X direction.

The glass structure 10 according to the present embodiment includes the glass 100 according to the present embodiment and the filler 200 filled on the thin region 120 of the glass 100. It is preferable that the difference in refractive index between the filler 200 and the glass 100 at a wavelength of 555 nm is 0.008 or less in absolute value, and that the difference in refractive index between the filler 200 and the glass 100 at a wavelength of 507 nm is 0.008 or less in absolute value. By setting the refractive index of the filler 200 filled on the thin region 120 to this range, it is possible to prevent the stepped region 122 from being visually recognized.

The on-vehicle display device 1 according to the present embodiment includes the displays 22 to 25 and the glass structure 10. In the on-vehicle display device 1, the glass structure 10 can be sufficiently bent.

The on-vehicle display device 1 is preferably bonded to the displays 22 to 25 in a state where the thin region 120 is elastically deformed. Accordingly, the glass structure 10 can be sufficiently bent in the on-vehicle display device 1.

In the on-vehicle display device 1, it is also preferable that the glass structure 10 is wound up. Accordingly, the glass structure 10 can be sufficiently bent in the on-vehicle display device 1.

In the on-vehicle display device 1, it is also preferable that the thick region 110 of the glass 100 of the glass structure 10 is bonded to a frame body, and the thin region 120 is held in a movable state. Accordingly, the glass structure 10 can be sufficiently bent in the on-vehicle display device 1.

One aspect of the glass, the glass structure, and the on-vehicle display device according to the present embodiment is as follows.

[1] A glass having a first main surface and a second main surface opposite to the first main surface,

the glass having a thick region and a thin region that is adjacent to the thick region, has a recessed surface in the second main surface, and is thinner than the thick region, in which the thin region includes: a bottom region that is flat on the second main surface side in a state where the first main surface is fixed so as to make contact with a flat surface; and a stepped region provided between the bottom region and the thick region, and the thin region satisfies the following formula (1).
[Formula 6]

$$\frac{G_w - 2G_a}{G_w} \geq 0.5 \quad \cdots (1)$$

In the formula (1), when a direction perpendicular to a thickness direction of the glass and also perpendicular to a direction in which a thickness of the glass is constant in the stepped region is defined as a first direction, $G_w$ represents a length (mm) of the thin region in the first direction, and $G_a$ represents a length (mm) of the stepped region in the first direction.

[2] The glass according to [1], in which the thick region includes a region that is flat in the state where the first main surface is fixed so as to make contact with a flat surface.
[3] The glass according to [1] or [2], in which in a cross section including the thickness direction of the glass and the first direction in the state where the first main surface is fixed so as to make contact with a flat surface, an angle formed by a straight line connecting one end point and the other end point of the stepped region in the first direction and an extension line of the bottom region is 25° or more and 90° or less.

[4] The glass according to [3], in which

the stepped region includes a region that forms a curved line in the cross section including the thickness direction and the first direction in the state where the first main surface is fixed so as to make contact with a flat surface, and the curved line is convex on the first main surface side with respect to the straight line.

[5] The glass according to any one of [1] to [4], in which

in a cross section including the thickness direction and the first direction in the state where the first main surface is fixed so as to make contact with a flat surface, two or more of the thin regions are formed in the first direction, the thick region is formed between the thin regions, and
the thin regions and the thick region formed therebetween satisfy the following formula (2).
[Formula 7]

$$\frac{G_s}{G_w + G_s} \geq 0.5 \quad \cdots (2)$$

In the formula (2), $G_w$ represents a length (mm) of each of the thin regions in the first direction, and $G_s$ represents a length (mm) of the thick region between the thin regions in the first direction.

[6] The glass according to any one of [1] to [5], in which

the glass is a chemically strengthened glass,
two or more of the thin regions are formed in the first direction, and
in a state where the thin regions form a curved surface having a curvature radius R (mm) by elastic deformation, when tf is a value represented by the following formula (3), at least one of the thin regions satisfies the following formula (4).
[Formula 8]

$$t_f = \frac{t_w G_w + t_s G_s}{G_w + G_s} \quad \cdots (3)$$

[Formula 9]

$$1.198E\left(\frac{t_f}{2R - t_f}\right) < 1.5\sigma_{cs} \quad \cdots (4)$$

In the formula (3) and the formula (4), $t_w$ represents a thickness (mm) of the bottom region, $G_w$ represents a length (mm) of the thin region in the first direction, $t_s$ represents a thickness (mm) of the thick region, $G_s$ represents a length (mm) of the thick region between the thin regions in the first direction, E represents a Young's modulus (GPa) of the glass, and $\sigma_{CS}$ represents a compression pressure (MPa) due to chemical strengthening of the glass.

[7] The glass according to [6], in which
the curvature radius R of the curved surface formed by at least one of the thin regions is 10 mm or more and 10000 mm or less.
[8] The glass according to any one of [1] to [7], in which
the thick region has a thickness of 0.2 mm or more and 2.5 mm or less.
[9] The glass according to any one of [1] to [8], in which
the bottom region has a thickness of 0.05 mm or more and 0.5 mm or less.
[10] The glass according to any one of [1] to [9], in which
the thin region extends in a second direction that is perpendicular to the thickness direction of the glass and the first direction.
[11] The glass according to any one of [1] to [10], in which

the glass is bendable with a second direction that is perpendicular to the thickness direction of the glass and the first direction as an axis.
[12] A glass structure including:

the glass according to any one of [1] to [11]; and
a filler filling the thin region of the glass.

[13] The glass structure according to [12], in which

a difference in refractive index between the filler and the glass at a wavelength of 555 nm is 0.008 or less in absolute value, and
a difference in refractive index between the filler and the glass at a wavelength of 507 nm is 0.008 or less in absolute value.

[14] An on-vehicle display device including:

a display; and
the glass structure according to [12] or [13].

[15] The on-vehicle display device according to [14], in which
the glass structure is bonded to the display in a state where the thin region is elastically deformed.
[16] The on-vehicle display device according to [14], in which
the glass structure is wound up.
[17] The on-vehicle display device according to [14], in which
in the glass structure, the thick region of the glass is bonded to a frame body, and the thin region is held in a movable state.

(Examples)

Next, Examples will be described. The embodiments may be modified as long as the effects of the invention are exhibited. Table 1 is a table showing properties of glasses according to Examples 1 to 8. Examples 1 and 5 are Comparative Examples, and Examples 2 to 4 and 6 to 9 are Inventive Examples.
A simulation model of the glass 100 was produced under the following conditions.

(Glass Simulation Model)

First, a chemically strengthened glass having the thick region 110 having a length in the X direction of 30 mm, a length in the Y direction of 30 mm, and a thickness $t_s$ = 1.1 (mm), and the thin region 120 having an arbitrary thickness tf and an arbitrary width $G_w$ ("Dragontrail (registered trademark) Pro" manufactured by AGC Co., Ltd.) was produced as a raw glass of the glass structure 10. Here, the glass structure 10 is assumed to have a compressive stress layer having a compressive stress value (CS) of 950 MPa. The depth (DOL) of the compressive stress layer is assumed to be 20 $\mu$m.
In the simulation, a model of the glass 100 was generated by inputting $G_a$, $G_w$, $G_s$, and the shape of the second main surface 122B of the stepped region 122, and an approximate limit bending radius (mm), a filling portion cross-sectional area ratio, and a 4PB intensity ratio per kg were calculated by stress analysis.
The approximate limit bending radius is a curvature radius R of a bent portion of the glass 100 when the maximum stress generated when the glass 100 is bent reaches a predetermined limit stress, and can be said to be a lower limit value of the curvature radius R (a maximum bending amount in a range in which the glass 100 is not damaged). That is, the smaller the value of the approximate limit bending radius is, the better the bending is.
The filling portion cross-sectional area ratio is a ratio of the cross-sectional area of the filler 200 to the cross-sectional area of the minimum constituent unit, that is, the cross-sectional area of a region including one thin region 120 and one thick region 110, and specifically, refers to a ratio of the cross-sectional area of the filler 200 filled in the filler 200 to the cross-sectional area of the minimum constituent unit. Here, in the case where the area occupied by the filler 200 is small, generally, the usage amount of the filler 200 whose refractive index is adjusted can be reduced, which is excellent in cost, and at the same time, the stress load applied to the filler 200 whose durability is inferior to that of the glass 100 when the glass 100 is bent can be reduced. Accordingly, it is considered that the smaller the filling portion cross-sectional area ratio, the more excellent.
The 4PB intensity ratio is a dimensionless number represented by $\delta a/\delta b$. Here, $\delta a$ (mm) is a deflection amount when a pressure of 5 MPa is applied to a region having a width of 1 mm on a center line (parallel to the X direction) that is orthogonal to the thin region 120 and connects a midpoint of the side surface 100C1 located on the direction X2 side of the glass 100 and a midpoint of the side surface 100C2 located on the direction X1 side of the glass 100 on the glass 100, and δb (mm) is a deflection amount when a load is similarly applied to a glass having the same length in the X direction as that of the glass 100 of 30 mm, a length in the Y direction of 30 mm, and a thickness of the thick region 110 of 1.1 mm, and having no thin region 120. That is, it can be said that the 4PB intensity ratio is a ratio of the deflection amount of the glass 100 to an assumed case where the glass 100 does not have the thin region 120, and it is considered that the smaller the 4PB intensity ratio is and the closer the 4PB intensity ratio is to 1, the better the strength is because the decrease in the strength due to the provision of the thin region 120 can be prevented.

[Table 1]

(Table 1)

| Ex. | Presence or absence of thin region | $(G_w-2G_a)/G_w$ (%) | Stepped region | $\theta$ (°) | $G_s/(G_w+G_s)$ (%) | Approximate limit bending radius (mm) | Filling portion cross-sectional area ratio (%) | 4PB intensity ratio |
|---|---|---|---|---|---|---|---|---|
| Ex. 1 | Absence | 38.5 | Curved surface | - | 33 | 38 | 39 | 5.2 |
| Ex. 2 | Presence | 91 | Straight line | 45 | 33 | 22 | 50 | 5.4 |
| Ex. 3 | Presence | 91 | Curved surface | 45 | 33 | 16 | 52 | 5.6 |
| Ex. 4 | Presence | 88 | Curved surface | 45 | 50 | 22 | 39 | 2.6 |
| Ex. 5 | Presence | 30 | Straight line | 45 | 60 | 62 | 21 | 1.5 |
| Ex. 6 | Presence | 50 | Straight line | 12 | 60 | 45 | 25 | 1.6 |
| Ex. 7 | Presence | 88 | Straight line | 51 | 60 | 38 | 30 | 1.9 |
| Ex. 8 | Presence | 88 | Curved surface | 51 | 60 | 31 | 31 | 2.0 |
| Ex. 9 | Presence | 93 | Straight line | 51 | 60 | 39 | 28 | 2.1 |

(Example 1)

FIG. 10 is a diagram illustrating a cross section of a cover glass in Example 1. FIG. 10 illustrates a minimum structure of repetition of the cover glass, and the same applies to the following Examples. Therefore, the length represented by $G_s$ in the first direction of the thick region between the thin regions is twice a length in the first direction of one of the thick regions adjacent to the thin region in the drawing.

As illustrated in FIG. 10, although, in Example 1, the entire thin region 120 had an arch shape formed of a curved surface, a region having a flatness of 0.07 mm or less was regarded as the bottom region 121, and the value of $(G_w - 2G_a)/G_w$ in the left side of formula (1) was calculated. More specifically, the minimum structure of the glass 100 in Example 1 has a length of 30 mm in the X direction and a thickness of 1.1 mm. The thick region 110 is 10 mm ($G_s = 10$ mm), the thin region 120 is provided over 20 mm ($G_w = 20$ mm) at the center in the X direction between thick regions 121, the thin region 120 has a concave curved surface symmetrical with respect to the center in the X direction, and a thickness at the center in the X direction (a thickness of the thinnest portion) is 0.20 mm. As described above, in the thin region 120, the region having a flatness of 0.07 mm or less is regarded as the bottom region 121, and the stepped regions 122 of 6.15 mm ($G_a = 6.15$ mm) are provided at both ends of the bottom region 121 in the X direction. In Example 1, the value of $G_s/(G_w + G_s)$ in the left side of formula (2) is the value shown in Table 1. In Example 1, which is a Comparative Example, it can be found that since formula (1) is not satisfied, the glass cannot be sufficiently bent.

(Example 2)

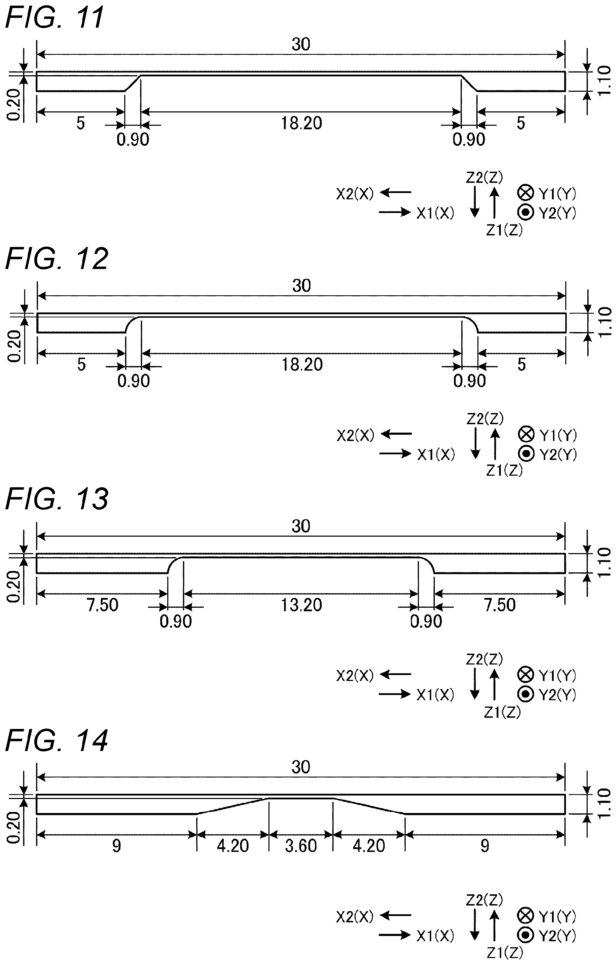

FIG. 11 is a diagram illustrating a cross section of a cover glass in Example 2. As illustrated in FIG. 11, in Example 2, in the thin region 120, the shape of the second main surface 122B of each of the stepped regions 122 is an inclined surface, and the bottom region 121 is provided. More specifically, the minimum structure of the glass 100 in Example 2 has a length of 30 mm in the X direction and a thickness of 1.1 mm. The thick region 110 is 10 mm ($G_s$ = 10 mm), the thin region 120 is provided over 20 mm ($G_w$ = 20 mm) in the X direction between the thick regions 121, and the bottom region 121 and the stepped regions 122 are provided in the thin region 120. The bottom region 121 is provided over 18.20 mm and has a thickness of 0.20 mm. In addition, the stepped regions 122 of 0.90 mm ($G_a$ = 0.90 mm) are provided at both ends of the bottom region 121 in the X direction, and the second main surface 122B of each of the stepped regions 122 is an inclined surface in a cross section viewed from the Y direction, and an angle θ corresponding to the inclination thereof is 45°. In Example 2, the value of ($G_w$ - 2$G_a$)/$G_w$ and the value of $G_s$/($G_w$ + $G_s$) are values shown in Table 1. As shown in Table 1, in Example 2, which is an Inventive Example, it can be found that since formula (1) is satisfied, the glass is easily bent, and thus the glass is sufficiently bent compared to Example 1.

(Example 3)

FIG. 12 is a diagram illustrating a cross section of a cover glass in Example 3. As illustrated in FIG. 12, in Example 3, in the thin region 120, the shape of the second main surface 122B of each of the stepped regions 122 is a curved surface that is convex toward the first main surface 100A side, and the bottom region 121 is provided. More specifically, the minimum structure of the glass 100 in Example 3 has a length of 30 mm in the X direction and a thickness of 1.1 mm. The thick region 110 is 10 mm ($G_s$ = 10 mm), the thin region 120 is provided over 20 mm ($G_w$ = 20 mm) in the X direction between the thick regions 121, and the bottom region 121 and the stepped regions 122 are provided in the thin region 120. The bottom region 121 is provided over 18.20 mm and has a thickness of 0.20 mm. In addition, the stepped regions 122 of 0.90 mm ($G_a$ = 0.90 mm) are provided at both ends of the bottom region 121 in the X direction, the second main surface 122B of each of the stepped regions 122 is a curved surface having an approximation radius of 0.90 mm, and an angle θ corresponding to the inclination thereof is 45°. In Example 3, the value of ($G_w$ - 2$G_a$)/$G_w$ and the value of $G_s$/($G_w$ + $G_s$) are values shown in Table 1. As shown in Table 1, in Example 3, which is an Inventive Example, it can be found that since formula (1) is satisfied, the glass is easily bent, and further, since the stepped region 122 has a curved surface, the glass is more easily bent, and the glass is sufficiently bent.

(Example 4)

FIG. 13 is a diagram illustrating a cross section of a cover glass in Example 4. As illustrated in FIG. 13, in Example 4, in the thin region 120, the shape of the second main surface 122B of each of the stepped regions 122 is also a curved surface that is convex toward the first main surface 100A side, and the bottom region 121 is also provided. More specifically, the minimum structure of the glass 100 in Example 4 has a length of 30 mm in the X direction and a thickness of 1.1 mm. The thick region 110 is 15 mm ($G_s$ = 15 mm), the thin region 120 is provided over 15 mm ($G_w$ = 15 mm) in the X direction between the thick regions 121, and the bottom region 121 and the stepped regions 122 are provided in the thin region 120. The bottom region 121 is provided over 13.20 mm and has a thickness of 0.20 mm. In addition, the stepped regions 122 of 0.90 mm ($G_a$ = 0.90 mm) are provided at both ends of the bottom region 121 in the X direction, the second main surface 122B of each of the stepped regions 122 is a curved surface having an approximation radius of 0.90 mm, and an angle θ corresponding to the inclination thereof is 45°. In Example 4, the value of ($G_w$ - 2$G_a$)/$G_w$ and the value of $G_s$/($G_w$ + $G_s$) are values shown in Table 1. In Example 4, which is an Inventive Example, since formula (1) is satisfied, the glass is easily bent, since the stepped region 122 has a curved surface, the glass is more easily bent, and further, since formula (2) is also satisfied, the strength is improved.

(Example 5)

FIG. 14 is a diagram illustrating a cross section of a cover glass in Example 5. As illustrated in FIG. 14, in Example 5, the shape of the second main surface 122B of each of the stepped regions 122 is an inclined surface, and the bottom region 121 is provided. More specifically, the minimum structure of the glass 100 in Example 5 has a length of 30 mm in the X direction and a thickness of 1.1 mm. The thick region 110 is 18 mm ($G_s$ = 18 mm), the thin region 120 is provided over 12 mm ($G_w$ = 12 mm) in the X direction between the thick regions 121, and the bottom region 121 and the stepped regions 122 are provided in the thin region 120. The bottom region 121 is provided over 3.60 mm and has a thickness of 0.20 mm. In addition, the stepped regions 122 of 4.20 mm ($G_a$ = 4.20 mm) are provided at both ends of the bottom region 121 in the X direction, and the second main surface 122B of each of the stepped regions 122 is an inclined surface in a cross section viewed from the Y direction, and an angle $\theta$ corresponding to the inclination thereof is 45°.

In Example 5 which is a Comparative Example, the value of $(G_w - 2G_a)/G_w$ and the value of $G_s/(G_w + G_s)$ are values shown in Table 1. As shown in Table 1, in Example 5, which is a Comparative Example, it can be found that since formula (1) is not satisfied, the glass cannot be sufficiently bent.

(Example 6)

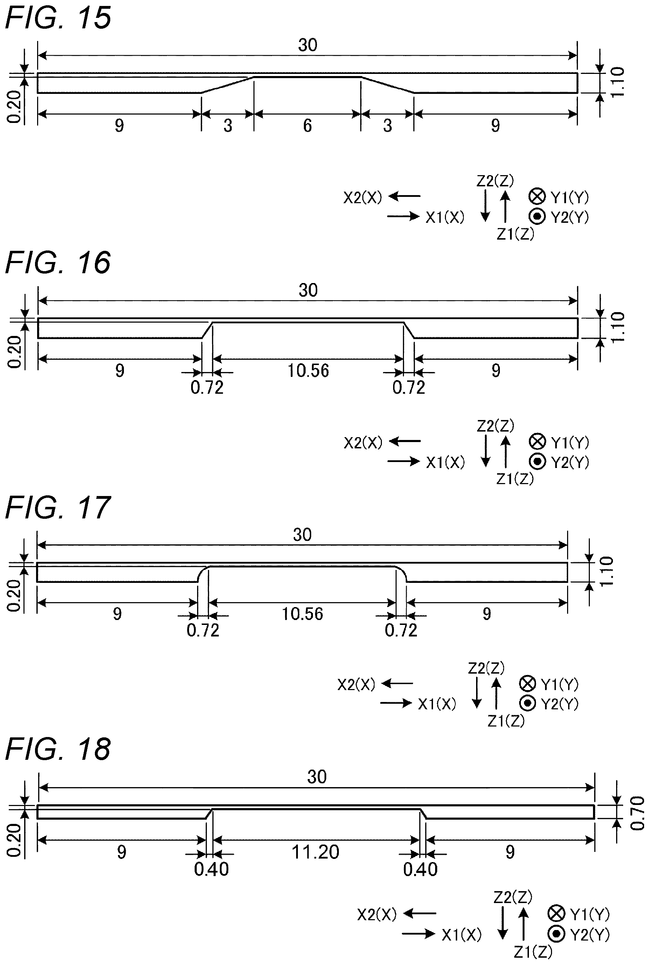

FIG. 15 is a diagram illustrating a cross section of a cover glass in Example 6. As illustrated in FIG. 15, in Example 6, as in Example 5, the shape of the second main surface 122B of each of the stepped regions 122 is an inclined surface, and the bottom region 121 is provided. More specifically, the minimum structure of the glass 100 in Example 6 has a length of 30 mm in the X direction and a thickness of 1.1 mm. The thick region 110 is 18 mm ($G_s$ = 18 mm), the thin region 120 is provided over 12 mm ($G_w$ = 12 mm) in the X direction between the thick regions 121, and the bottom region 121 and the stepped regions 122 are provided in the thin region 120. The bottom region 121 is provided over 6 mm and has a thickness of 0.20 mm. In addition, the stepped regions 122 of 3 mm ($G_a$ = 3 mm) are provided at both ends of the bottom region 121 in the X direction, and the second main surface 122B of each of the stepped regions 122 is an inclined surface in a cross section viewed from the Y direction, and an angle $\theta$ corresponding to the inclination thereof is 12°. In Example 6, which is an Inventive Example, the value of $(G_w - 2G_a)/G_w$ and the value of $G_s/(G_w + G_s)$ are values shown in Table 1. In Example 6, which is an Inventive Example, since formula (1) is satisfied, the glass is easily bent, and further, since formula (2) is also satisfied, the strength is improved.

(Example 7)

FIG. 16 is a diagram illustrating a cross section of a cover glass in Example 7. As illustrated in FIG. 16, in Example 7, as in Example 5, the shape of the second main surface 122B of each of the stepped regions 122 is an inclined surface, and the bottom region 121 is provided. More specifically, the minimum structure of the glass 100 in Example 7 has a length of 30 mm in the X direction and a thickness of 1.1 mm. The thick region 110 is 18 mm ($G_s$ = 18 mm), the thin region 120 is provided over 12 mm ($G_w$ = 12 mm) in the X direction between the thick regions 121, and the bottom region 121 and the stepped regions 122 are provided in the thin region 120. The bottom region 121 is provided over 10.56 mm and has a thickness of 0.20 mm. In addition, the stepped regions 122 of 0.72 mm ($G_a$ = 0.72 mm) are provided at both ends of the bottom region 121 in the X direction, and the second main surface 122B of each of the stepped regions 122 is an inclined surface in a cross section viewed from the Y direction, and an angle $\theta$ corresponding to the inclination thereof is 51°. In Example 7, which is an Inventive Example, the value of $(G_w - 2G_a)/G_w$ and the value of $G_s/(G_w + G_s)$ are values shown in Table 1. In Example 7, which is an Inventive Example, it can be found that since formula (1) is satisfied, the glass is easily bent, and further, since formula (2) is also satisfied, the strength is improved, and the glass is sufficiently bent.

(Example 8)

FIG. 17 is a diagram illustrating a cross section of a cover glass in Example 8. As illustrated in FIG. 17, in Example 8, the shape of the thin region 120 is similar to that in Examples 3 and 4, and in the thin region 120, the shape of the second main surface 122B of the stepped region 122 is a curved surface that is convex toward the first main surface 100A, and the bottom region 121 is provided. More specifically, the minimum structure of the glass 100 in Example 8 has a length of 30 mm in the X direction and a thickness of 1.1 mm. The thick region 110 is 18 mm ($G_s$ = 18 mm), the thin region 120 is provided over 12 mm ($G_w$ = 12 mm) in the X direction between the thick regions 121, and the bottom region 121 and the stepped regions 122 are provided in the thin region 120. The bottom region 121 is provided over 10.56 mm and has a thickness of 0.20 mm. In addition, the stepped regions 122 of 0.72 mm ($G_a$ = 0.72 mm) are provided at both ends of the bottom region 121 in the X direction, and the second main surface 122B of each of the stepped regions 122 is a curved surface having an approximation radius of 0.90 mm, and an angle $\theta$ corresponding to the inclination thereof is 51°. In Example 8, the value of $(G_w - 2G_a)/G_w$ and the value of $G_s/(G_w + G_s)$ are values shown in Table 1. As shown in Table 1, in Example 8, which is an Inventive Example, it can be found that since formula (1) is satisfied, the glass is easily bent, since formula (2) is also satisfied, the strength is improved, and further, since the second main surface 122B of the stepped region 122 is a curved surface, the glass is more easily bent, and the glass is sufficiently bent.

**EP 4 458 783 A1**

(Example 9)

FIG. 18 is a diagram illustrating a cross section of a cover glass in Example 9. As illustrated in FIG. 18, in Example 9, the shape of the thin region 120 is similar to that in Example 5, the shape of the second main surface 122B of each of the stepped regions 122 is an inclined surface, and the bottom region 121 is provided. The minimum structure of the glass 100 in Example 9 has a length of 30 mm in the X direction and a thickness of 0.70 mm. The thick region 110 is 18 mm ($G_s$ = 18 mm), the thin region 120 is provided over 12 mm ($G_w$ = 12 mm) in the X direction between the thick regions, and the bottom region 121 and the stepped regions 122 are provided in the thin region 120. The bottom region 121 is provided over 11.20 mm and has a thickness of 0.20 mm. In addition, the stepped regions 122 of 0.40 mm ($G_a$ = 0.40 mm) are provided at both ends of the bottom region 121 in the X direction, and the second main surface 122B of each of the stepped regions 122 is a straight line, and an angle $\theta$ corresponding to the inclination thereof is 51°. In Example 9, the value of ($G_w$ - $2G_a$)/$G_w$ and the value of $G_s$/($G_w$ + $G_s$) are values shown in Table 1. As shown in Table 1, in Example 9, which is an Inventive Example, it can be found that since formula (1) is satisfied, the glass is easily bent, since formula (2) is also satisfied, the strength is improved, and further, since the second main surface 122B of the stepped region 122 is a curved surface, the glass is more easily bent, and the glass is sufficiently bent.

Although the embodiment of the present invention has been described above, the embodiment is not limited to the contents of the embodiment. In addition, the components described above should include those that can be easily conceived by a person skilled in the art, those that are substantially the same, and those within a so-called equivalent range. Further, the above components can be appropriately combined. Further, various omissions, substitutions, or modifications of the components can be made without departing from the gist of the embodiment described above.

The present application is based on a Japanese Patent Application (No. 2021-213096) filed on December 27, 2021, the contents of which are incorporated herein by reference.

REFERENCE SIGNS LIST

1: on-vehicle display device
10: glass structure
10A: first main surface
10B: second main surface
22, 23, 24, 25: display
30: substrate
100: glass
100A: first main surface
100B: second main surface
100C1, 100C2, 100C3, 100C4: side surface
110: thick region
110A: first main surface
110B: second main surface
120: thin region
120A: first main surface
120B: second main surface
120C: end region
120D: central region
121: bottom region
121A: first main surface
121B: second main surface
121L: straight line
122: stepped region
122A: first main surface
122B: second main surface
122B1: convex region
122B2: concave region
122L: straight line
122P1, 122P2: point
200: filler

**Claims**

1. A glass having a first main surface and a second main surface opposite to the first main surface,

the glass having a thick region and a thin region that is adjacent to the thick region, has a recessed surface in the second main surface, and is thinner than the thick region, wherein
the thin region includes: a bottom region that is flat on the second main surface side in a state where the first main surface is fixed so as to make contact with a flat surface; and a stepped region provided between the bottom region and the thick region, and
the thin region satisfies the following formula (1):
[Formula 1]

$$\frac{G_w - 2G_a}{G_w} \geq 0.5 \quad \cdots (1)$$

in the formula (1), when a direction perpendicular to a thickness direction of the glass and also perpendicular to a direction in which a thickness of the glass is constant in the stepped region is defined as a first direction,
$G_w$ represents a length (mm) of the thin region in the first direction, and
$G_a$ represents a length (mm) of the stepped region in the first direction.

2. The glass according to claim 1, wherein
the thick region includes a region that is flat in the state where the first main surface is fixed so as to make contact with a flat surface.

3. The glass according to claim 1, wherein
in a cross section including the thickness direction of the glass and the first direction in the state where the first main surface is fixed so as to make contact with a flat surface, an angle formed by a straight line connecting one end point and the other end point of the stepped region in the first direction and an extension line of the bottom region is 25° or more and 90° or less.

4. The glass according to claim 3, wherein

the stepped region includes a region that forms a curved line in the cross section including the thickness direction and the first direction in the state where the first main surface is fixed so as to make contact with a flat surface, and
the curved line is convex on the first main surface side with respect to the straight line.

5. The glass according to claim 1, wherein

in a cross section including the thickness direction and the first direction in the state where the first main surface is fixed so as to make contact with a flat surface, two or more of the thin regions are formed in the first direction, the thick region is formed between the thin regions, and
the thin regions and the thick region formed therebetween satisfy the following formula (2):
[Formula 2]

$$\frac{G_s}{G_w + G_s} \geq 0.5 \quad \cdots (2)$$

in the formula (2), $G_w$ represents a length (mm) of each of the thin regions in the first direction, and $G_s$ represents a length (mm) of the thick region between the thin regions in the first direction.

6. The glass according to claim 1, wherein

the glass is a chemically strengthened glass,
two or more of the thin regions are formed in the first direction, and
in a state where the thin regions form a curved surface having a curvature radius R (mm) by elastic deformation, when tf is a value represented by the following formula (3), at least one of the thin regions satisfies the following formula (4):
[Formula 3]

$$t_f = \frac{t_w G_w + t_s G_s}{G_w + G_s} \quad \cdots (3)$$

[Formula 4]

$$1.198E\left(\frac{t_f}{2R - t_f}\right) < 1.5\sigma_{cs} \quad \cdots (4)$$

in the formula (3) and the formula (4), $t_w$ represents a thickness (mm) of the bottom region, $G_w$ represents a length (mm) of the thin region in the first direction, $t_s$ represents a thickness (mm) of the thick region, $G_s$ represents a length (mm) of the thick region between the thin regions in the first direction, E represents a Young's modulus (GPa) of the glass, and $\sigma_{cs}$ represents a compression pressure (MPa) due to chemical strengthening of the glass.

7. The glass according to claim 6, wherein
   the curvature radius R of the curved surface formed by at least one of the thin regions is 10 mm or more and 10000 mm or less.

8. The glass according to claim 1, wherein
   the thick region has a thickness of 0.2 mm or more and 2.5 mm or less.

9. The glass according to claim 1, wherein
   the bottom region has a thickness of 0.05 mm or more and 0.5 mm or less.

10. The glass according to claim 1, wherein
    the thin region extends in a second direction that is perpendicular to the thickness direction of the glass and the first direction.

11. The glass according to claim 1, wherein
    the glass is bendable with a second direction that is perpendicular to the thickness direction of the glass and the first direction as an axis.

12. A glass structure comprising:

    the glass according to any one of claims 1 to 11; and
    a filler filling the thin region of the glass.

13. The glass structure according to claim 12, wherein

    a difference in refractive index between the filler and the glass at a wavelength of 555 nm is 0.008 or less in absolute value, and
    a difference in refractive index between the filler and the glass at a wavelength of 507 nm is 0.008 or less in absolute value.

14. An on-vehicle display device comprising:

    a display; and
    the glass structure according to claim 12.

15. The on-vehicle display device according to claim 14, wherein
    the glass structure is bonded to the display in a state where the thin region is elastically deformed.

16. The on-vehicle display device according to claim 14, wherein
    the glass structure is wound up.

17. The on-vehicle display device according to claim 14, wherein
in the glass structure, the thick region of the glass is bonded to a frame body, and the thin region is held in a movable state.

*FIG. 1*

*FIG. 2*

## FIG. 3

## FIG. 4

## FIG. 5

## FIG. 6

FIG. 7

FIG. 8

## FIG. 9

## FIG. 10

*FIG. 11*

*FIG. 12*

*FIG. 13*

*FIG. 14*

*FIG. 15*

*FIG. 16*

*FIG. 17*

*FIG. 18*

# EP 4 458 783 A1

## INTERNATIONAL SEARCH REPORT

| | International application No. |
|---|---|
| | **PCT/JP2022/047245** |

### A. CLASSIFICATION OF SUBJECT MATTER

*C03C 15/00*(2006.01)i; *B60K 35/00*(2006.01)i; *C03C 19/00*(2006.01)i; *C03C 21/00*(2006.01)i; *G09F 9/00*(2006.01)i
FI: C03C15/00 Z; G09F9/00 302; B60K35/00 Z; C03C21/00 101; C03C19/00 Z

According to International Patent Classification (IPC) or to both national classification and IPC

### B. FIELDS SEARCHED

Minimum documentation searched (classification system followed by classification symbols)

C03C15/00-23/00; B60K35/00; G09F9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2004-079467 A (NIPPON SHEET GLASS CO LTD) 11 March 2004 (2004-03-11) paragraphs [0002], [0019], fig. 1, claims | 1-4, 8-11 |
| A | | 5-7, 12-17 |
| X | JP 2021-520044 A (CORNING INCORPORATED) 12 August 2021 (2021-08-12) claims, paragraphs [0035]-[0046], fig. 3B, 4A | 1-5, 8-13 |
| Y | | 14 |
| A | | 6-7, 15-17 |
| Y | WO 2021/246499 A1 (NIPPON SHEET GLASS CO LTD) 09 December 2021 (2021-12-09) paragraphs [0027]-[0030] | 14 |
| A | | 6-7, 16-17 |
| Y | WO 2021/006043 A1 (AGC INC.) 14 January 2021 (2021-01-14) claims 1, 4, 10 | 1-5, 8-15 |
| A | | 6-7, 16-17 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/047245**

**C.      DOCUMENTS CONSIDERED TO BE RELEVANT**

| Category* | Citation of document, with indication, where appropriate, of the relevant passages | Relevant to claim No. |
|---|---|---|
| Y | WO 2019/049958 A1 (AGC INC.) 14 March 2019 (2019-03-14) claim 1, paragraph [0028] | 1-5, 8-15 |
| A | | 6-7, 16-17 |
| Y | WO 2021/256089 A1 (AGC INC.) 23 December 2021 (2021-12-23) claim 1, fig. 1, paragraph [0015] | 12-15 |
| A | | 6-7, 16-17 |

Form PCT/ISA/210 (second sheet) (January 2015)

**INTERNATIONAL SEARCH REPORT**
**Information on patent family members**

International application No.

**PCT/JP2022/047245**

| Patent document cited in search report | | | Publication date (day/month/year) | Patent family member(s) | | | Publication date (day/month/year) |
|---|---|---|---|---|---|---|---|
| JP | 2004-079467 | A | 11 March 2004 | CN | 1672468 | A | |
| JP | 2021-520044 | A | 12 August 2021 | US<br>claims, paragraphs [0073]-[0086], fig. 3B, 4A<br>KR<br>CN | 2021/0047235<br><br><br>10-2020-0119858<br>111886211 | A1<br><br><br>A<br>A | |
| WO | 2021/246499 | A1 | 09 December 2021 | (Family: none) | | | |
| WO | 2021/006043 | A1 | 14 January 2021 | US<br>claims 1, 4, 10<br>EP<br>CN | 2022/0127191<br><br>3998242<br>114097016 | A1<br><br>A1<br>A | |
| WO | 2019/049958 | A1 | 14 March 2019 | US<br>claim 1, paragraph [0086]<br>CN | 2020/0199020<br><br>111065612 | A1<br><br>A | |
| WO | 2021/256089 | A1 | 23 December 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210107829 A

- JP 2021213096 A